Europäisches Patentamt

European Patent Office

Office européen des brevets

(19)

(11) Publication number: 0 401 041
A2

## (12) EUROPEAN PATENT APPLICATION

(21) Application number: 90306012.7

(22) Date of filing: 01.06.90

(51) Int. Cl.⁵: G11B 11/10, G11B 5/66

(30) Priority: 02.06.89 JP 140559/89

(43) Date of publication of application:
05.12.90 Bulletin 90/49

(84) Designated Contracting States:
AT BE CH DE DK ES FR GB GR IT LI LU NL SE

(71) Applicant: **NIPPON HOSO KYOKAI**
**No 2-1, Jinnan 2-chome Shibuya-ku**
**Tokyo 150(JP)**

Applicant: **MITSUI PETROCHEMICAL**
**INDUSTRIES, LTD.**
**2-5, Kasumigaseki 3-chome Chiyoda-ku**
**Tokyo 100(JP)**

(72) Inventor: **Saito, Nobuo, c/o NHK Science and**
**Techn. Res. Lab.**
10-11, Kinuta 1-chome
Setagaya-ku, Tokyo(JP)
Inventor: **Kawamura, Norikazu, c/o NHK**
**Science and Techn.**
**Res. Lab., 10-11, Kinuta 1-chome**
Setagaya-ku, Tokyo(JP)
Inventor: **Togami, Yuji**
c/o Mitsui Petrochem. Ind. Ltd., 3
Chigusa-Kaigan
Ichihara-shi, Chiba(JP)
Inventor: **Mizumoto, Kunihiko**
c/o Mitsui Petrochem. Ind. Ltd., 3
Chigusa-Kaigan
Ichihara-shi, Chiba(JP)

(74) Representative: **Senior, Alan Murray et al**
**J.A. KEMP & CO 14 South Square Gray's Inn**
**London WC1R 5EU(GB)**

(54) Recording medium, recording and reproducing device and recording process.

(57) In accordance with the present invention, there are provided multi-layer recording media having a substrate and thereon multiple recording layers different in coercive force, processes for recording information in the recording media, and reproducing devices for recording and reproducing information relying on the use of such recording media and recording processes as mentioned above. Because of a multi-later structure comprising multiple recording layers different in coercive force, the recording media of the invention are capable of recording therein multi-valued information and have improved recording density, recording capacity, data transfer rate and also improved reliability of recorded signals.

*FIG. 1*

## RECORDING MEDIUM, RECORDING AND REPRODUCING DEVICE AND RECORDING PROCESS

This invention relates to recording media recording density, recording capacity, data transfer rate and reliability of recorded signal, and to recording and reproducing devices and recording processes.

It has been a common practice in the art of magnetic recording to use magnetic recording media having a single-layer magnetic film as a recording layer. In cases where such magnetic recording media having the magnetic film in a single-layer structure are used for magnetic recording, however, there was a limit to the possible improvement in recording density, recording capacity and data transfer rate of magnetic recording, because the information recording pattern of such magnetic film of a single-layer structure is a two-signal recording based on the use of signals "0" and "1".

With the view of solving such technical problem as mentioned above, an attempt has already been made by the present inventors to increase ·recording density, recording capacity or data transfer rate of magnetic recording media by using a magnetic film of a multi-layer structure as the recording layer of said magnetic recording media (see, for example, Japanese Patent L-O-P Publn. No.32442/1989.

In the magnetic recording process as disclosed above, however, there was such a problem that allowable limit to change in power of the laser beam used in the recording process is small and reliability of recorded signals is poor because the magnetization state of the recording medium is controlled only by means of change in power of the laser beam used for recording information.

The present invention has been made in light of such circumstances as mentioned above, and an object of the invention is to provide recording media capable of magnetic recording information with improved recording density, recording capacity, data transfer rate or reliability of recorded signals, and to provide recording and reproducing devices and recording processes.

According to a first aspect the present invention provides a multi-layer recording medium for recording multi-level signals and comprising a plurality of recording layers on a substrate characterized in that the plurality of recording layers are different in coercive force and in that a non-magnetic interlayer is interposed between the recording layers.

According to a second aspect the present invention provides a recording and reproducing device for recording and reproducing multi-valued signals, comprising a recording device for recording signals on a recording medium by applying a magnetic field generated by magnetic flux generating means to the recording medium and a reproducing device for reproducing information recorded in the recording medium by irradiating the recording medium with a laser beam, characterized in that the magnetic flux generating means is operable to generate multi-level magnetic fields.

According to a third aspect the present invention provides a recording and reproducing device for recording and reproducing multi-valued signals, comprising a recording device for recording signals on a recording medium by irradiating the recording medium with an energy beam and simultaneously applying thereto a magnetic field generated by magnetic flux generating means and a reproducing device for reproducing signals recorded in the recording medium by irradiating the recording medium with a laser beam, characterized in that the magnetic flux generating means is operable to generate multi-level magnetic fields.

According to a fourth aspect the present invention provides a recording and reproducing device for recording and reproducing multi-valued signals, comprising a recording device for recording signals on a recording medium and a reproducing device for reproducing signals recorded on the recording medium, by irradiating the recording medium with a laser beam, characterized in that the reproducing device detects the rotation angle of the plane of polarization of a reflected light of the laser beam with which the recording medium is irradiated.

According to a fifth aspect the present invention provides a recording and reproducing device for recording and reproducing multi-valued signals, comprising a recording device for recording signals on a recording medium and a reproducing device for reproducing signals recorded on the recording medium by irradiating the recording medium with a laser beam, characterized in that the reproducing device detects the rotation angle of the plane of polarization of a transmitted light of the laser beam with which the recording medium is irradiated.

According to a sixth aspect the present invention provides a recording and reproducing device for recording and reproducing multi-valued signals, comprising a recording device for recording signals on a recording medium and a reproducing device for reproducing signals recorded on the recording medium, characterized in that the reproducing device has a magnetic information-reproducing function.

According to a seventh aspect the present invention provides a recording process for recording multi-valued signals, characterized by: applying a magnetic field to a multi-layer recording medium having multiple recording layers different in coercive force and a non-magnetic interlayer interposed between the recording layers on a substrate and thereby uniforming the magnetization direction of the recording layers in the predetermined direction, and then applying a magnetic field having a strength corresponding to the signal to be recorded in the recording layers in the direction opposite to the magnetization direction of the recording medium and thereby controlling the number of the recording layers in which the magnetization direction has been reversed.

According to the magnetic recording media, magnetic recording and reproducing devices and the magnetic recording process of the present invention, the magnetization state of the magnetic recording media, that is, the magnetization direction and the strength of the magnetization, can be easily controlled by means of the strength of magnetic field to be applied to the magnetic recording media and hence multi-valued information corresponding to the magnetization state can be recorded in the magnetic recording media, and furthermore the magnetization state of the magnetic recording media can be easily read out by utilizing Kerr effect or Faraday effect, or by means of a common magnetic head. As the result, when the magnetic recording is carried out in accordance with the present invention, recording density attained is increased, and recording capacity, data transfer rate and reliability of recorded signals can be markedly improved.

The invention will be further described by way of non-limitative example with reference to the accompanying drawings, in which:-

Fig. 1 is a rough cross-sectional view of recording medium of the present invention.

Fig. 2 is an illustration showing a principle of recording process applied to the recording medium of the present invention.

Fig. 3 is an illustration showing a vertical block of the recording and reproducing device used in the present invention.

Fig. 4 is an observed magnetic Kerr hysteresis loop of the magnetic recording medium of the present invention.

Fig. 5 shows the results obtained by measuring a magnetic Kerr rotation angle of the magnetic recording medium of the present invention while applying magnetic fields varying in strength to the recording medium.

Fig. 6 shows the results obtained in an experiment reproducing recorded information from the magnetic recording medium of the present invention having recorded therein a multi-valued information.

The reference numerals in the drawings are as follows:

1. Substrate
2, 2a, 2b, 2c ... Recording layer
3 ... Interlayer
4 ... Protective film
5 ... Control section
6 ... Line of magnetic force generating section
7 ... Source of laser beam
8 ... Polarizer
9 ... Half mirror
10... Analyzer
11. Light detecting section
12. Signal processing section
20... Recording medium

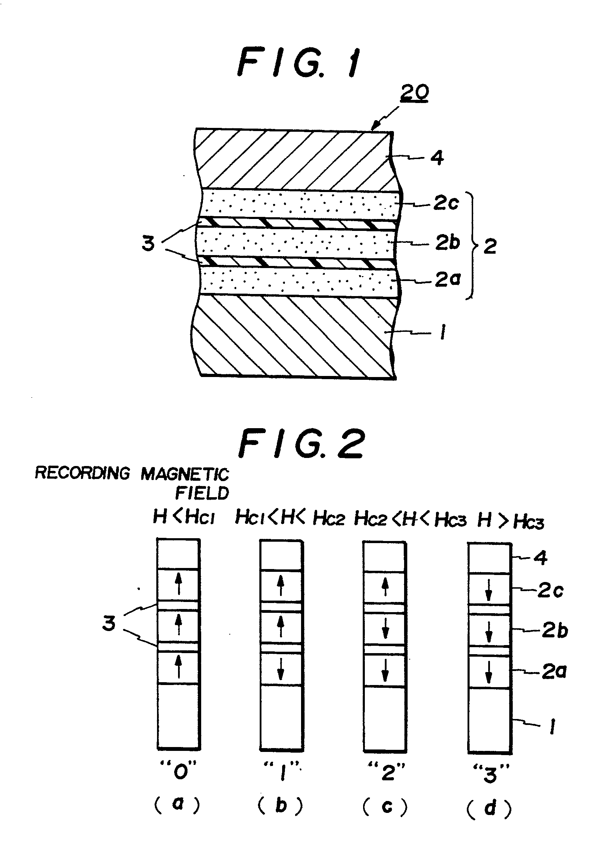

Recording medium 20 of the invention is composed, for example, as shown in Fig. 1, of substrate 1, multiple recording layers 2 formed on the substrate 1, and non-magnetic interlayers 3 interposed between the recording layers 2, and protective film 4 may be provided on the uppermost recording layer.

The substrate 1 is preferably a transparent substrate when a laser beam used is incident from the side of the substrate 1. Besides inorganic materials such as glass, aluminum and the like, the substrate 1 may be composed of organic materials such as poly(methyl methacrylate), polycarbonate, polymer alloy of polycarbonate and polystyrene, such amorphous polyolefins as disclosed in U.S. Patent 4,614,778, for example, copolymer of ethylene and 1,4,5,8-dimethane-1,2,3,4,4a,5,8,8a-octahydronaphthalene(tetracyclododecene), ethylene and 2-methyl-1,4,5,8-dimethano-1,2,3,4,4a,5,8,8a-octahydronaphthalene (methyltetracyclododecene), and ethylene and 2-ethyl-1,4,5,8-dimethano-1,2,3,4,4a,5,8,8a-octahydronaphthalene, poly-4-methyl-1-pentene, epoxy resin, polyether sulfone and polyether imide. The substrate 1, though not limited to a specific thickness range, has a thickness of preferably from 0.5 to 5 mm, especially from 1 to 2 mm.

The recording layers 2 may be composed of alloys of rare earth element-transition metal system alloys such as Tb-Fe alloy and Tb-Co alloy, or oxide magnetic materials such as garnet. Each one of the recording layers 3 desirably has a thickness of usually from 20 to 500 Å, preferably from 20 to 300 Å or thereabout, though the thickness varies according to the material constituting the recording layers 2. It is not necessary that the materials constituting the recording layers 2 be of the same kind, and they may be different in kind.

The interlayers 3 used as transparent non-magnetic films may be composed of nitrides such as $SiN_x$ (x is preferably $0<x\leq4/3$), $AlN_x$ (x is preferably $0<x\leq1$), $AlSiN_x$ and $BN_x$; oxides such as $SiO_x$ - $(0<x\leq2)$, $Tb-SiO_2$, $Mg-SiO_2$, $Al_2O_3$, $SiO_2-Al_2O_3$, $Mg-SiO_2-Al_2O_3$, $Tb-SiO_2-Al_2O_3$, $Ba-SiO_2$, $Ba-Al_2O_3$,

Mg-Al$_2$O$_3$, TiO$_2$, TiO, ZnO, ZrO$_2$, Ta$_2$O$_5$, Nb$_2$O$_5$, CeO$_2$, SnO$_2$, TeO$_2$ and indium-tin oxide; and ZnS, CdS, ZnSe, SiC, Si and MgF$_2$. Useful non-magnetic materials include such metals as Al, Cu, Au and Ag. It is not necessary that the materials constituting the interlayers 3 be of the same kind, and they may be different in kind. It is necessary that the interlayers 3 individually have such a thickness that interaction between the recording layers is inhibited so that each recording layer independently forms and retains its pattern of magnetic domain for example, the thickness of the interlayer 3 when composed of SiO$_2$ is preferably at least 15 Å.

The protective film 4 may be composed of the same materials as used in the interlayers 3.

The recording layers 2, the interlayers 3 and, if necessary, the protective film 4 may be formed on the substrate 1 by the usual film forming means such as vacuum deposition, sputtering or ion plating.

Taking, as an example, the recording medium having three recording layers, the principle of recording and reproducing information adopted in the recording and reproducing device of the invention is illustrated below. In this case, coercive force of the recording layer 2a nearest to the substrate is taken as Hc1, that of the middle recording layer 2b is taken as Hc2, and that of the recording layer 2c remotest from the substrate is taken as Hc3, while assuming Hc1 < Hc2 < Hc3.

First of all, prior to recording information in the recording medium as in the case of common magnetic recording media, a sufficiently strong magnetic field is applied to the recording medium to uniform the magnetization direction of the whole of this magnetic recording medium in the predetermined direction. This state is as shown in Fig. 2 (a) and taken as "0".

Subsequently, a recording magnetic field H of Hc1 < H < Hc2 is applied to this magnetic recording medium in the direction reverse to the magnetization direction of the whole of the recording medium established, whereupon the magnetization direction of the recording layer 2a is reversed, leading to the state as shown in Fig. 2 (b). This state is taken as "1". Similarly, a recording magnetic field H of Hc2<H<Hc3 is applied to the recording medium, whereupon the magnetization directions of the recording layers 2a and 2b are reversed, leading to the state "2" as shown in Fig. 2 (c). Further, a recording magnetic field H of Hc3<H is applied to the recording medium, whereupon the magnetization directions of all the recording layers are reversed, leading to the state "3" as shown in Fig. 2 (d). In the case of the magnetic recording medium having three recording layers, it is possible to record four signals "0", "1", "2" and "3" in this magnetic recording medium by controlling the number of recording layers in which the magnetization direction has been reversed.

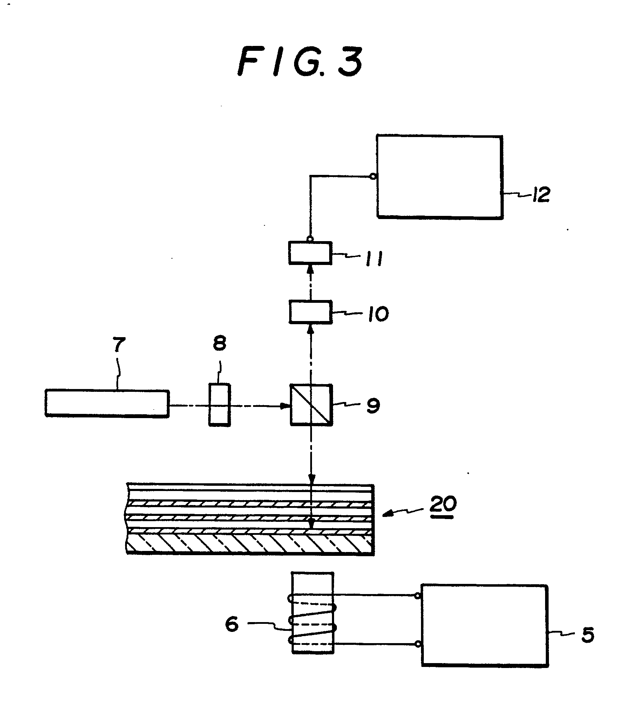

The recording and reproducing device of the present invention is illustrated below with reference to Fig. 3. The recording device for recording information in the recording medium is composed of a control section 5 to transmit recording signals corresponding to a series of information to be recorded and a line of magnetic force generating section 6 having such a function of generating magnetic fields varying in strength, for example, as that of an electromagnet. In practicing the recording, a recording current corresponding to the recording signal is first applied to the line of magnetic force generating section 6 to generate a magnetic field corresponding to the recording current in the vicinity of a recording medium 20. In this case, the strength of magnetic field to be applied to the recording medium 20 may be controlled by regulating the strength of the recording current. In this manner, the number of recording layers in which the magnetization direction has been reversed can be controlled in one recording bit of the recording medium 20, and thus multi-valued information can be recorded in the recording medium 20 by the use of this device.

In the present invention, information may be recorded in the recording medium by applying a magnetic field to the recording medium and, at the same time, by irradiating the recording medium with a laser beam. Temperature of the irradiated portion in the recording medium rises and the coercive force of the portion decreases, thus the applied magnetic field can change the direction of the magnetization of the portion, whereby information can be recorded therein.

The information thus recorded in the recording medium may be reproduced by utilizing Kerr effect or Faraday effect, and also may be reproduced by magnetic reproduction technique.

Reproduction of the recorded information utilizing Kerr effect may be carried out using such a reproducing device as shown in Fig. 3. This reproducing device is composed of a laser beam source 7, a polarizer 8, a half mirror 9, an analyzer 10, a light detecting device 11, and a reproduced signal processing section 12. When the recording medium 20 is irradiated with a laser beam passed through the polarizer 8, that is, a linear polarized light used as a recording light, the plane of polarization of the reflected light rotates by Kerr effect. This reflected light is then passed through the analyzer 10, and a change in amount of light of the reflected light thus passed is detected by the light detecting device 11 and reproduced as information in the reproduced signal processing section 12. The Kerr effect exerted on the reflected light varies according to the number of recording layers 2 in which the magnetization direction has been reversed in the magnetic recording medium 20, and hence the magnetization state of 20 can be read out by measuring the Kerr effect exerted on the reflected light, thereby reproducing the information recorded in the magnetic recording medium 20. Although only the reproducing device utilizing magnetic Kerr effect has been illustrated herein as an example of reproducing devices, it is also possible to use, according to the kind of recorded signals, a reproducing device utilizing Faraday effect or a reproducing device relying on the use of a common magnetic head.

Reproduction of the recorded information utilizing Faraday effect may be carried out by using a transmitted light utilizing type reproducing device or a reflected light utilizing type reproducing device. In the transmitted light utilizing type reproducing device, the laser beam source 7 and the light detecting device 11 are placed facing each other with the recording medium 20 between. In the case of the reflected light utilizing type reproducing device, a reflecting film is interposed between the substrate 1 and the recording layer 2a so that the reproducing light reciprocates within the recording medium, and hence the same reproducing device as that utilizing Kerr effect may be used.

The recording and reproducing process of the present invention has been illustrated hereinbefore with reference to the recording medium having three recording layers. In the invention, however, it is also possible to use magnetic recording media having multiple recording layers in excess of three layers. In this case, when the number of recording layers is taken as n-layers, there can be recorded in the same surface area $\log_2(n+1)$ times as much information as the conventional recording process. In the present invention, the signal used comes to comply with a theoretical value of $\log_2(n+1)$, and the conversion thereof can be made only by changing the input and output signal, whereby recording capacity may be readily made $\log_2(n+1)$ times. The data transfer rate can also be increased in proportion to the increased recording capacity, and hence television signals can be recorded and reproduced for effective time by suitably select the strength of recording magnetic field, that of reproducing light and the number of recording layers.

The recording device and reproducing device of the recording and reproducing device of the present invention are not always indivisible, and they can be used separately.

In recording information in the magnetic recording medium by the magnetic field modulation method, it has been believed that because the coercive force of the magnetic recording medium is generally large and a large magnetic field is needed to record, hence speeding up of the recording operation is difficult. However, on account of the progress of researches for obtaining optimized magnetic head or medium suited to the magnetic field modulation method, the problems associated with the speeding up of the recording operation are nearing a solution gradually.

According to the recording media, recording and reproducing device and recording process of the present invention as mentioned hereinbefore, recording density in the magnetic recording is improved, and data transfer rate and reliability of the recorded information are markedly improved.

The present invention is illustrated below in detail with reference to an example, but it should be construed that the invention is in no way limited to that example.

Example

The recording medium used herein had a glass substrate and thereon three recording layers each composed of Tb-Fe alloy having a thickness of 70 Å. As will be mentioned later, coercive forces of these recording layers were different under the influence of an interaction between the recording layers, though the composition of the recording layer is the same. The interlayer and protective layer used were composed of $SiO_2$ and had their thickness of 30 Å and 800 Å, respectively.

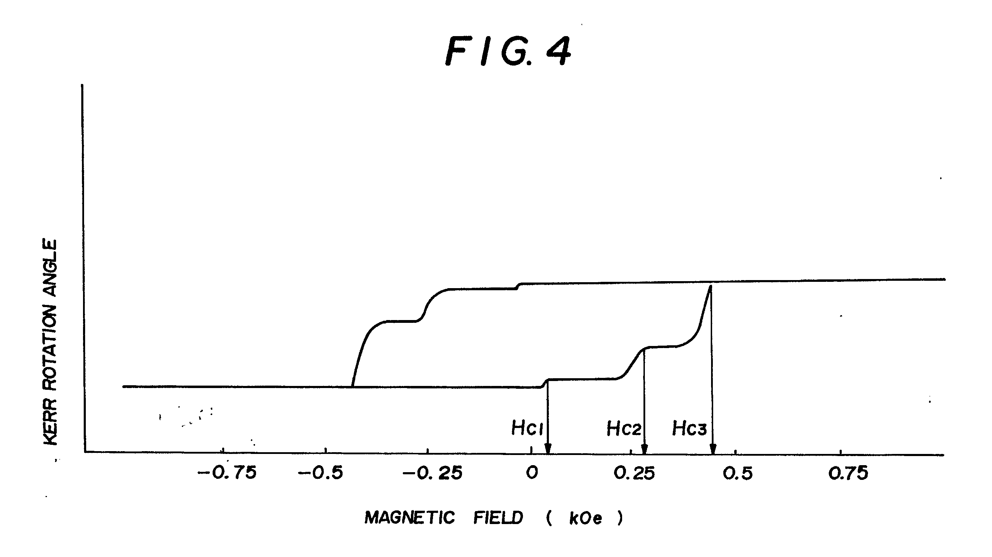

To this recording medium was applied a sufficiently strong magnetic field of negative direction (wherein "negative" means upward direction in Fig. 2) to uniform the magnetization direction of all the recording layers in the upward direction. Thereafter, the recording magnetic field H was gradually increased in strength from the negative to the positive (wherein "positive" means downward direction in Fig. 2) through 0 (zero) to apply a sufficiently strong magnetic field to the recording medium in the positive direction, and then the magnetic field is applied to the recording medium from the positive to the negative through 0(zero). The magnetic Kerr hysteresis loop observed in the above case is shown in Fig. 4.

In view of this loop consisting of a staircase of three steps, the loop indicates that the three recording layers are different in coercive force from one another, and each recording layer holds its own magnetization state.

That is, no change in the recording medium occur during a period of time at which the recording magnetic field H is smaller than Hc1, but the magnetization of the layer having a coercive force Hc1 is reversed at the time of H = Hc1. During a period of time at which the relation of Hc1<H<Hc2 is held, this state is held, and the magnetization of the layer having a coercive force Hc2 is reversed at the time of H = Hc2. During a period of time at which the relation of Hc2<H<Hc3 is held, this state is held, and the magnetization of the layer having a coercive force Hc3 is reversed at the time of H = Hc3, and no change in magnetization direction occur even when H is made larger than that.

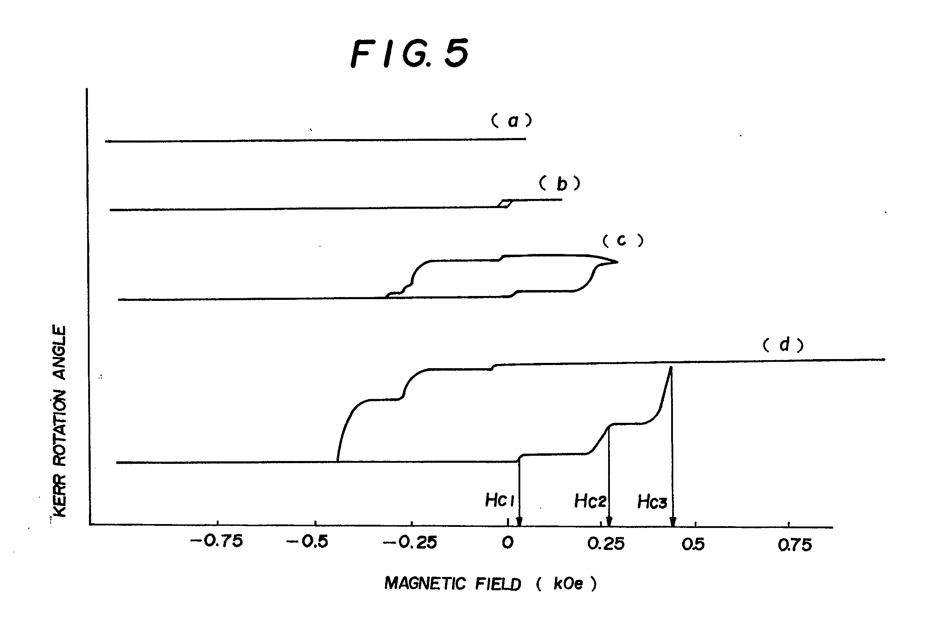

The foregoing may be confirmed by instituting a comparison between the magnetic Kerr hysteresis loop (Fig. 5 a) drawn by application of a magnetic field in which a maximum value of the recording magnetic field H is smaller than Hc1, the magnetic Kerr hysteresis loop (Fig. 5 b) drawn by application of a magnetic field in which a maximum value of the recording magnetic field H is Hc1 < H < Hc2, the magnetic Kerr hysteresis loop (Fig. 5 c) drawn by application of a magnetic field in which a maximum value of the recording magnetic field H is Hc2 < H < Hc3, and the magnetic Kerr hysteresis loop (Fig. 5 d) drawn by application of a magnetic field in which a maximum value of the recording magnetic field H is H > Hc3.

From the results obtained above, it is understood that four signals can be recorded in the magnetic recording medium by recording information only in the recording layer having a coercive force Hc1 where the magnetization direction is reversed by holding the recording magnetic field H in the relation of Hc1<H<Hc2 (writing of the signal "1"), recording information in two recording layers having coercive forces Hc1 and Hc2, respectively, where the magnetization direction thereof are reversed by holding the recording magnetic field H in the relation Hc2<H<Hc3 (writing of the signal "2"), and recording information in the recording layers where the magnetization direction of all the layers are reversed by holding the recording magnetic field H in the relation H>Hc3 (writing of the signal "3"), coupled with the recording of the signal "0" at the time when the relation of H<Hc1 is held.

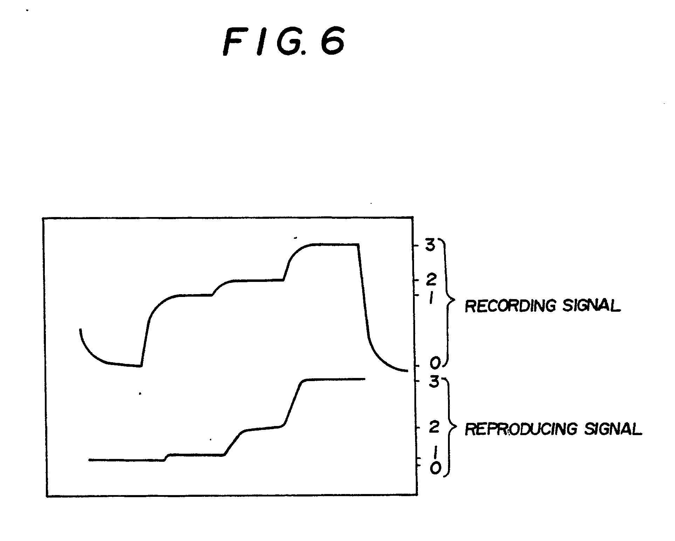

Fig. 6 shows a recording current applied to an electromagnet, and a signal reproduced using laser beam from information which was recorded by the magnetic field generated from the electromagnet. From the results, it is understood that four reproducing signals are obtained, corresponding to four recording signals.

## Claims

1. A multi-layer recording medium (20) for recording multi-level signals and comprising a plurality of recording layers (2a, 2b, 2c) on a substrate (1) characterized in that the plurality of recording layers (2a, 2b, 2c) are different in coercive force and in that a non-magnetic interlayer (3) is interposed between the recording layers (2am 2b, 2c).

2. A multi-layer recording medium according to claim 1 wherein the non-magnetic interlayer (3) is transparent.

3. A recording and reproducing device for recording and reproducing multi-valued signals, comprising a recording device for recording signals on a recording medium by applying a magnetic field generated by magnetic flux generating means (5, 6) to the recording medium and a reproducing device (7-12) for reproducing information recorded in the recording medium by irradiating the recording medium with a laser beam, characterized in that the magnetic flux generating means (5, 6) is operable to generate multi-level magnetic fields.

4. A recording and reproducing device for recording and reproducing multi-valued signals, comprising a recording device for recording signals on a recording medium by irradiating the recording medium with an energy beam and simultaneously applying thereto a magnetic field generated by magnetic flux generating means 5, 6) and a reproducing device (7-12) for reproducing signals recorded in the recording medium by irradiating the recording medium with a laser beam, characterized in that the magnetic flux generating means (5, 6) is operable to generate multi-level magnetic fields.

5. A recording and reproducing device for recording and reproducing multi-valued signals, comprising a recording device (5, 6) for recording signals on a recording medium and a reproducing device (7-12) for reproducing signals recorded on the recording medium, by irradiating the recording medium with a laser beam, characterized in that the reproducing device (7-12) detects the rotation angle of the plane of polarization of a reflected light of the laser beam with which the recording medium is irradiated.

6. A recording and reproducing device for recording and reproducing multi-valued signals, comprising a recording device (5, 6) for recording signals on a recording medium and a reproducing device (7-12) for reproducing signals recorded on the recording medium by irradiating the recording medium with a laser beam, characterized in that the reproducing device (7-12) detects the rotation angle of the plane of polarization of a transmitted light of the laser beam with which the recording medium is irradiated.

7. A recording and reproducing device for recording and reproducing multi-valued signals, comprising a recording and reproducing multi-valued signals, comprising a recording device for recording signals on a recording medium and a reproducing device for reproducing signals recorded on the recording medium, characterized in that the reproducing device has a magnetic information-reproducing function.

8. A recording and reproducing device according to any of claims 3-7 wherein the recording medium is a multi-layer recording medium capable of recording multi-level signals, the recording medium having multiple recording layers different in coercive force and a non-magnetic interlayer interposed between the recording layers on a substrate.

9. A recording and reproducing device according to claim 8 wherein the non-magnetic interlayer is transparent.

10. A recording process for recording multi-valued signals, characterized by: applying a magnetic field to a multi-layer recording medium having multiple recording layers different in coercive force and a non-magnetic interlayer interposed between the recording layers on a substrate and thereby uniforming the magnetization direction of the recording layers in the predetermined direction, and then applying a magnetic field having a strength corresponding to the signal to be recorded in the recording layers in the direction opposite to the magnetization direction of the recording medium and thereby controlling the number of the recording layers in which the magnetization direction has been reversed.

# F I G. 1

# F I G. 2

RECORDING MAGNETIC
FIELD

$H < H_{c1}$   $H_{c1} < H < H_{c2}$   $H_{c2} < H < H_{c3}$   $H > H_{c3}$

"0"        "1"        "2"        "3"

( a )      ( b )      ( c )      ( d )

# F I G. 3

# FIG. 4

EP 0 401 041 A2

# FIG. 5

KERR ROTATION ANGLE

MAGNETIC FIELD ( kOe )

(a)

(b)

(c)

(d)

Hc1  Hc2  Hc3

-0.75  -0.5  -0.25  0  0.25  0.5  0.75

EP 0 401 041 A2

# FIG. 6

RECORDING SIGNAL

REPRODUCING SIGNAL